# EUROPEAN PATENT SPECIFICATION

(11) **EP 2 980 016 B1**
(45) Date of publication and mention of the grant of the patent: **06.06.2018**
(21) Application number: 15425045.0
(22) Date of filing: 17.06.2015
(51) Int. Cl.: C01B 25/45, H01M 10/052, H01M 4/58

(54) **PROCESS FOR THE PREPARATION OF MICROCRYSTALLINE LIFEPO4, WHICH IS SPECIFICALLY SUITABLE AS CATHODE MATERIAL IN LITHIUM BATTERIES**
VERFAHREN ZUR HERSTELLUNG VON MIKROKRISTALLINEN LIFEPO4, DIE INSBESONDERE ALS KATHODENMATERIAL IN LITHIUMBATTERIEN GEEIGNET SIND
PROCÉDÉ POUR LA PRÉPARATION DE LIFEPO4 MICROCRISTALLINE, QUI EST PARTICULIÈREMENT APPROPRIÉ COMME MATÉRIAU DE CATHODE DANS DES BATTERIES AU LITHIUM

(30) Priority: 31.07.2014 IT RM20140434
(43) Date of publication of application: 03.02.2016
(73) Proprietor: Drive the Innovation in Energy Storage S.r.l., 04100 Latina (IT)
(72) Inventor: PROSINI, Pier Paolo, 00181 Rome (IT)
(74) Representative: Bodenham, Paul Stanislas Joseph

(56) References cited:
- PROSINI P P ET AL: "A new synthetic route for preparing LiFePO[4] with enhanced electrochemical performance", JOURNAL OF THE ELECTROCHEMICAL SOCIETY, ELECTROCHEMICAL SOCIETY, vol. 149, no. 7, 20 May 2002 (2002-05-20), pages A886-A890, XP008128733, ISSN: 0013-4651, DOI: 10.1149/1.1481716
- GUO X F ET AL: "Rapid synthesis of LiFePO4/C composite by microwave method", SOLID STATE IONICS, NORTH HOLLAND PUB. COMPANY. AMSTERDAM; NL, NL, vol. 180, no. 4-5, 27 April 2009 (2009-04-27), pages 386-391, XP026064595, ISSN: 0167-2738, DOI: 10.1016/J.SSI.2008.11.021 [retrieved on 2009-03-16]
- P. SUBRAMANYA HERLE ET AL: "Nano-network electronic conduction in iron and nickel olivine phosphates", NATURE MATERIALS, vol. 3, no. 3, 22 February 2004 (2004-02-22), pages 147-152, XP055172734, ISSN: 1476-1122, DOI: 10.1038/nmat1063
- PIER PAOLO PROSINI ET AL: "A synthesis of LiFePO4 starting from FePO4 under reducing atmosphere", AIP CONFERENCE PROCEEDINGS, 19 June 2014 (2014-06-19), pages 109-118, XP055185022, ISSN: 0094-243X, DOI: 10.1063/1.4883049

## Description

Description in support of an industrial patent invention whose title is PROCESS FOR THE PREPARATION OF MICROCRYSTALLINE LiFePO₄ WHICH IS SPECIFICALLY SUITABLE AS CATHODE MATERIAL IN LITHIUM BATTERIES.

In the name of Drive the Innovation in Energy Storage s.r.l., whose registered office is located at Via Eugenio di Savoia n.25 04100 Latina (LT) Italy.

Designated Inventor: Pier Paolo PROSINI.
¹P. P.Prosini, D. Zane, Mauro Pasquali, Improved electrochemical performance of a LiFeP04-based composite cathode, Electrochimica Acta 46 (2001) 3517. 2 Y.Q. Hu, M.M. Doeff, R. Kostecki, R. Finones, Electrochemical Performance of Sol-Gel Synthesized LiFeP04 in Lithium Batteries, J. Electrochem. Soc. 151 (2004) 1279.

Lithium iron phosphate (LiFePO₄) is emerging as one of the most interesting cathode materials for the production of lithium-ion batteries, that are used not only in connection with consumer electronics products, but also in connection with other areas in which lithium batteries have not yet reached their full commercial potential, such as, for example, in the automotive field or in the field of steady electricity accumulation. LiFePO₄ may be synthesized with various methods and, consequently, various synthetic procedures may be found in literature, which include: 1) A solid state (reaction¹; 2) Sol-gel²; 3) Hydrothermal synthesis³; 4) Co-precipitation⁴, 5) Heating with a microwave oven⁵ and various other methods, which also include many syntheses of LiFePO₄ that initially use FeP04 as a precursor. The use of FePO₄ in order to obtain LiFePO₄ gives rise to two possible synthetic routes: the first consists in the reduction and simultaneous lithiation of FePO₄. The second consists in a two-step process, in which the first step is the reduction of FePO₄ and the second is the lithiation thereof. A typical reagent used for the reduction and simultaneous lithiation of FePO₄ is lithium iodide (LiI). Prosini et al.⁶ first prepared LiFePO₄ by using LiI. The effect of LiI being used for improving the electrochemical performance of LiFePO₄ has been recently studied by Kuo et al.⁷. Shiratsuchi et al.⁸ have also carried out the reduction and simultaneous lithiation of FePO₄ with LiI in acetonitrile. The initial material was, in turn, synthesized
³G. Meligrana, C. Gerbaldi, A. Tuel, S. Bodoardo, N. Penazzi,Hydrothermal synthesis of high surface LiFeP04 powders as cathode for Li-ion cells, J. Power Sources 160 (2006) 516.
⁴K.S. Park, J.T. Son, H.T. Chung, S.J. Kim, C.H. Lee, H.G. Kim, Synthesis of LiFeP04 by co-precipitation and microwave heating, Electrochem. Commun. 5 (2003) 839.
⁵M. Higuchi, K. Katayama, Y. Azuma,Synthesis of LiFeP04 cathode material by microwave processing, J. Power Sources, 119 (2003) 258.
⁶P. P. Prosini, M. Carewska, S. Scaccia, P. Wisniewski,S. Passerini, and M. Pasquali, A New Synthetic Route for Preparing LiFeP04 with Enhanced Electrochemical Performance, J. Electrochem. Soc. 149 (2002) A886.
⁷H.T. Kuo, T.S. Chan, N.C. Bagkar, R.S. Liu, C.H. Shen, D.S. Shy, X. K. Xing, and J.-F. Lee, Effect of LiI Amount to Enhance the Electrochemical Performance of Carbon-Coated LiFeP04, Electrochem. Solid-State Lett. 12 (2009) A111.
⁸T.Shiratsuchi, S. Okada, J. Yamaki, S. Yamashita, T. Nishida, Cathode performance of olivine-type LiFeP04 synthesized by chemical lithiation, Journal of Power Sources, 173, (2007)979. by starting from an equimolar aqueous suspension of iron powder and P₂O₅.
⁹B. Wang, Y. Qiu, S. Ni, Ultrafine LiFeP04 cathode materials synthesized by chemical reduction and lithiation method in alcohol solution, Solid State Ionics, 178 (2007) 843; as well as K. Galoustov, M. Anthonisen, D.H. Ryan, D.D. MacNeil, Characterization of two lithiation reactions starting with an amorphous FeP04 precursor, Journal of Power Sources, 196 (2011) 6893.
10 J.Chen, Y.-C. Zou, F. Zhang, Y.-C. Zhang, F.-F. Guo, G.-D. Li, Superior electrode performance of LiFePO4/C composite prepared by an in situ polymerization restriction method, Journal of Alloys and Compounds 563(2013)264-268.
¹¹ J.-C. Zheng, X.-H. Li, Z.-X. Wang, H.-J. Guo, S.-Y. Zhou, LiFeP04 with enhanced performance synthesized by a novel synthetic route, Journal of Power Sources 184 (2008) 574.
¹² C.H. Mi, G.S. Cao, X.B. Zhao, Low-cost, one-step process for synthesis of carbon-coated LiFeP04 cathode, Mater. Lett. 59 (2005) 127.

A second possibility for obtaining LiFePO₄ by commencing from FePO₄ consists in the use of two different agents, one of which is a reducing agent and the other a lithiating agent. Studies to this effect may be found in literature, which have been conducted by using different reducing and lithiating agents. For example, amorphous LiFePO₄ has been obtained by the chemical reduction and subsequent lithiation of FePO₄ by means of the use of ascorbic acid as a reducing agent and lithium acetate as a source of lithium⁹. Chen et al.¹⁰ prepared a LiFePO₄/C composite by heating a mixture of resorcinol-formaldehyde as a reducing agent and lithium acetate dihydrate as a lithiating agent in nitrogen atmosphere. Zheng et al.¹¹ prepared amorphous LiFePO₄ via the lithiation of FePO₄·xH₂O by using oxalic acid as a reducing agent and lithium carbonate as a lithiating agent. Mi et al.¹² used polypropylene as the reducing agent (and carbon source) in a solid state reaction for the carbo-thermal production of LiFePO₄, with lithium carbonate as the lithiating agent. Li et al.¹³ used, instead, citric acid and lithium carbonate. Zhao et al.¹⁴ used glucose and lithium acetate Wang et al.¹⁵ used sucrose and lithium, nitrate while Guo et al. [1]⁵ used glucose and lithium hydroxide (in this latter case the material was synthesized by microwave irradiation)¹⁶. Finally, it should be noted that all these synthesis methods have been carried out under inert or reducing atmosphere. Only Zhang et al.¹⁷ prepared LiFePO₄ in air by starting from a mixture containing PEG 20000 as the carbon source, lithium carbonate as the lithium source, ammonium phosphate as the phosphate source and iron (II) oxalate as the iron source. This invention will describe the solid state synthesis of LiFePO₄, commencing from FePO₄, as well as the simultaneous use of lithium acetate both as a reducing agent and a lithiating agent, as defined in the subject-matter of claim 1.
¹³M.J. Li, L.Q. Sun, K. Sun, R.S. Wang, H.M. Xie, An optimum route to prepare FePO4·2H2O and its use as an iron source to synthesize LiFePO4, SCIENCE CHINA-CHEMISTRY, 56 (2013) 576-582.
¹⁴ R.R Zhao, L. C. Zhu, Z.Z. Huang, J.Z. Liang, H.Y. Chen, An investigation on the performance of LiFePO4/C derived from various FeP04, Ionics, 19 (2013) 581-588.
¹⁵F. Wang, J. Chen, M. Wu, B. Yi, Propylene oxide-assisted fast sol-gel synthesis of mesoporous and nano-structured LiFePO4/C cathode materials, Ionics 19 (2013) 451-460.
¹⁶Xiang-Feng Guo, Hui Zhan, Yun-Hong Zhou, Rapid synthesis of LiFePO4/C composite by microwave method, Solid State Ionics 180 (2009) 386-391.
¹⁷Q. Zhang, S. Wang, Z. Zhou, G. Ma, W. Jiang, X. Guo, S. Zhao, Structural and electrochemical properties of Nd-doped LiFePO4/C prepared without using inert gas, SOLID STATE IONICS, 191 (2011) 40-44.

The main purpose of this invention is to produce the material by starting from inexpensive precursors and using a method which is easy to implement and which, above all, does not involve the need to operate in a controlled environment, since such material may be synthesized directly in air.

This result has been achieved, according to this invention, by perfecting a process for the preparation of microcrystalline LiFePO₄ that is based on FePO₄ and lithium acetate, consisting in a single heating process that is conducted in air. Such material has been found to be particularly suitable for use as a cathode in lithium or lithium ion batteries. The inventive concept on which this process is based consists in the preparation of a mixture of anhydrous FePO₄ with lithium acetate, as well as in the subsequent heat treatment thereof, for the purpose of obtaining - in the subsequent reduction, lithiation and crystallization step - extremely small LiFePO₄ particles.

The importance - in the light of the low speeds at which lithium spreads in lithium-iron-phosphate - of the material having nanometric grain-sizes is - with a view to obtaining high-level electrochemical performances with remarkable discharge speeds - demonstrated herein.

According to a specific feature of the invention, the so obtained cathode material has a nanometric grain-size.

A better understanding of the invention will be had after having read the detailed description and the accompanying drawings that are set out below, which provide, by way of mere example and without any pretense of completeness, examples of how this invention may be applied.

In particular:
Figure 1 shows, in the presence of lithium acetate, a diffractogram of the material prepared for the heat treatment in the air of anhydrous FePO₄ heated at 550°C for 20 minutes;
Figure 2 shows an enlargement of the diffractogram illustrated in Figure 1, within a 35.0-36.4° range of diffraction;
Figure 3 shows the voltage profiles for the first 10 charge and discharge cycles as a function of the specific capacity of the microcrystalline lithium-iron-phosphate prepared according to this invention and discharged at C/10 discharge rate (17 mA g⁻¹);
Figure 4 shows the discharge voltage profiles as a function of the specific capacity of the micro-crystalline lithium-iron-phosphate prepared according to this invention and discharged at C/10, C/2, C, 2C, 3C and 5C rate (17, 85, 170, 340, 510 and 850 mA g⁻¹);
Figure 5 shows in a double logarithmic graph the specific energy variation that occurs, upon the specific power output being increased, in relation to the micro-crystalline lithium-iron-phosphate that has been prepared according to this invention;
Figure 6 shows the variation in the specific capacity that occurs, upon the number of cycles being increased, as regards the micro-crystalline lithium-iron-phosphate that has been prepared according to this invention;
Figures 7 and 8 are respectively microphotographs of Fe(III)PO₄ used as a precursor for the synthesis of LiFePO₄ and micro-crystalline LiFePO₄, which has been obtained as a result of heating the precursor in air with lithium acetate for 20' at 550°C.

According to this invention, anhydrous iron (III) phosphate - which is used as a precursor - is prepared by dehydrating iron phosphate hydrate, which is in turn preferably prepared by means of the spontaneous precipitation thereof from a solution of iron (II) sulfate and sodium phosphate, using hydrogen peroxide as the oxidizing agent (reaction 1). Alternatively, iron (III) phosphate hydrate can be prepared by reacting iron (III) sulfate with sodium phosphate (reaction 2). The two reactions in the preparation of iron (III) phosphate hydrate can be described as follows:

FeSO₄*7H₂O+ Na₂HPO₄+ ½ H₂O₂ → FePO₄*xH₂O ↓ + Na₂SO₄ + (8-x)H₂O (1)

Fe₂(SO₄)₃ + 2 Na₂HPO₄ + 2x H₂O → 2 FePO₄*x H₂O ↓ + 2 NaHSO₄+ Na₂SO₄ (2)

Anhydrous FePO₄ is obtained through the dehydration of iron (III) phosphate hydrate by heating it in air at temperatures between 300 and 400°C (reaction 3):

FePO₄*x H₂O → FePO₄ + x H₂O↑ (3)

Finally, microcrystalline LiFePO₄ is obtained through the reaction of anhydrous FePO₄ with lithium acetate by heating it in air at temperatures between 550 and 600°C (reaction 4):

FePO₄ + CH₃COOLi + 1.75 O₂ → LiFePO₄ + 2 CO₂↑ + 1.5 H₂O↑ (4)

The thermo-gravimetric analysis conducted on FePO₄ hydrate demonstrates that the material, upon being heated up to 450°C, has a weight loss of roughly 27%. This weight loss is due to the loss of the water of hydration (x in Eq. 3). This weight loss corresponds exactly to the evaporation of 3 moles of water per mole of iron (III) phosphate. The X-ray analysis of the product obtained after heat treatment confirms that anhydrous FePO₄ has an amorphous structure.

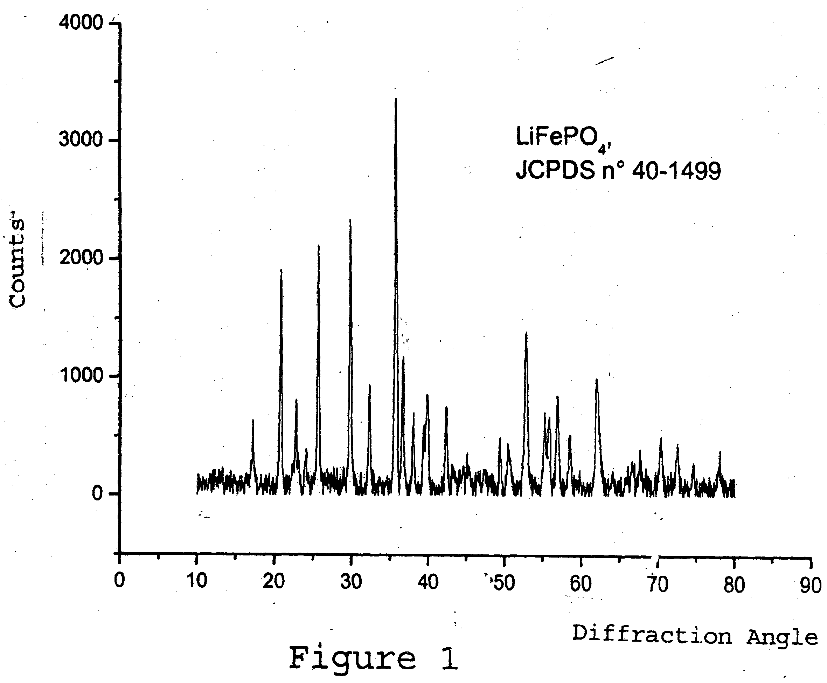

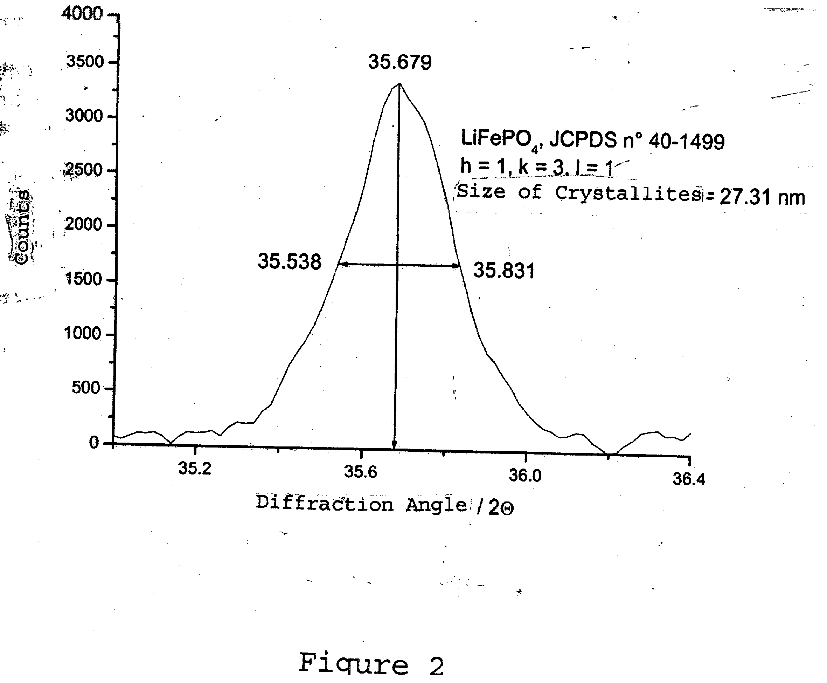

Figure 1 shows the diffractogram of the material obtained by heating anhydrous FePO₄ with lithium acetate at a temperature of 550°C for 30 minutes. Although the material shows the characteristic diffraction peaks of crystalline LiFePO₄ having olivine-type structures (JCPDS No. 40-1499), the peaks are small in intensity and broadly spread, thus indicating that the crystalline structure has very short coherence time intervals (i.e. the crystallites are small in size). Figure 2 shows an enlargement of the previous diffractogram depicting the peak belonging to the 131 plane of LiFePO₄. The numbers shown therein indicate the values of the angles corresponding to the maximum and the width, calculated at half height, of the peak. These values have been used to assess the size of the crystallites, for which the Sherrer formula has been used in order to calculate them: << d = k λ / Bcos θ>>, whereby d is the size of the crystallites, k is a constant that depends on the shape of the crystallites (and which, in the case at hand, has been assumed to be equal to 0.89), λ is the wavelength of the radiation used (amounting to 1.54 A as a result of having used a copper lamp), B is the peak's width at half height and θ is the diffraction angle of the peak. Using this formula, the crystallites' size was found to be about 28 nm.

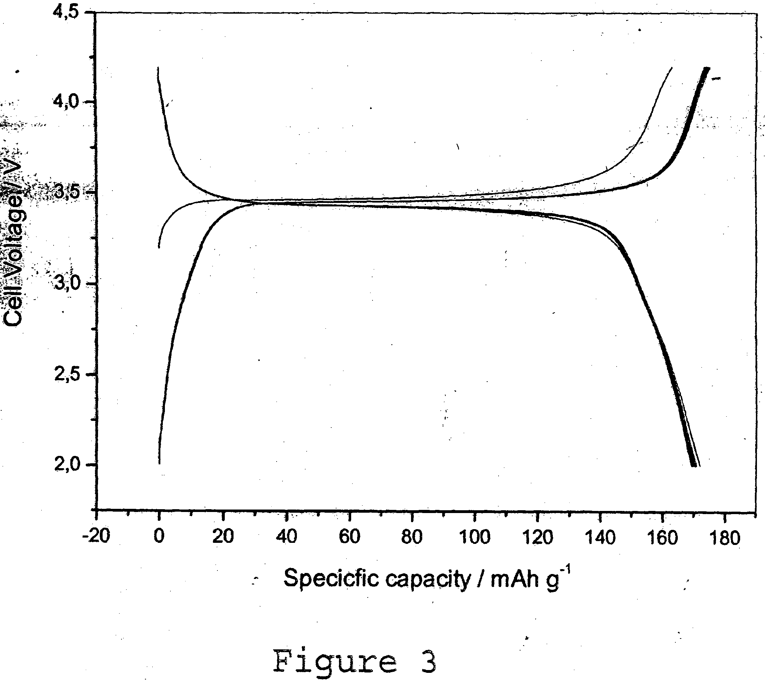

The voltage profiles for a cell as described above containing the material which is the subject-matter of the invention are shown in figure 3. They confirm the fact that the material is capable of discharging about 170 mAh g⁻¹ (roughly corresponding to the theoretical capacity) when cycled at a C/10 rate, with an average voltage of 3.40 V, corresponding to an energy density of 578 Wh kg⁻¹.

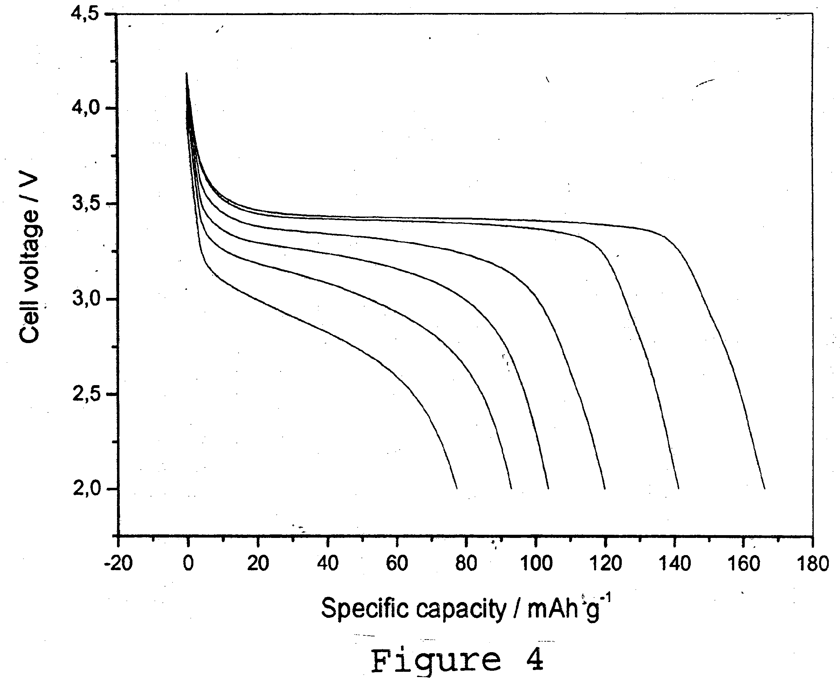

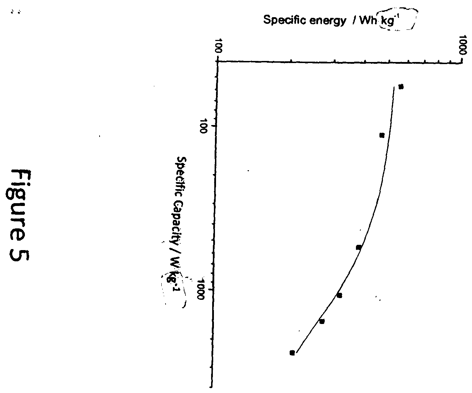

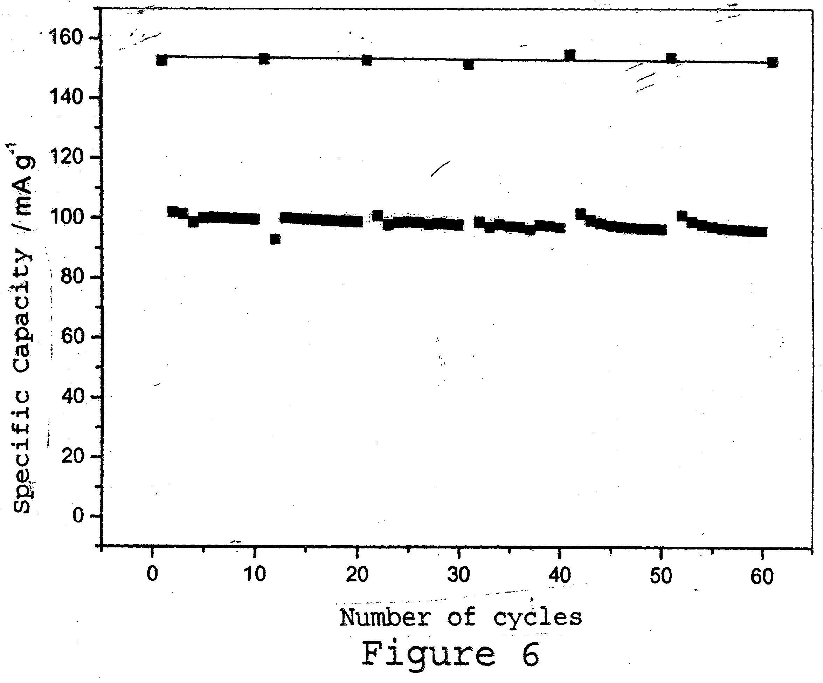

The performance of the material - depending on the number of cycles and the discharge rate - is illustrated in Figures 4-6. The material was cycled at rates of C/10, C/2, C, 3C and 5C and the dependence of the voltage profiles on the specific capacity are shown in Figure 4. By increasing the electrical discharge rate, the capacity of the material decreases, as does the cell voltage. At the maximum discharge rate (5C), the material is capable of discharging a little less than half the capacity discharged at C/10, at an average voltage discharge rate of 2.83 V. The result of the test is summarized in Figure 5, which shows the energy delivered on the basis of the specific power used (Ragone plot). The material may be discharged at over 2400 W kg⁻¹ by providing a specific energy capacity of 213 Wh kg⁻¹. Figure 6 shows the specific capacity trend based on the number of cycles. The cell was discharged at C rate. A reduced discharge rate cycle (C/10 rate) was conducted every 10 cycles in order to assess the ability to discharge the cell in less severe conditions. One can see from the graph that the cyclability of the material prepared in accordance with the process described herein is very good. As regards deep discharge cycles, the loss of capacity during the first 60 cycles was estimated at around 0,1% per cycle, while it was negligible during reduced current cycles.

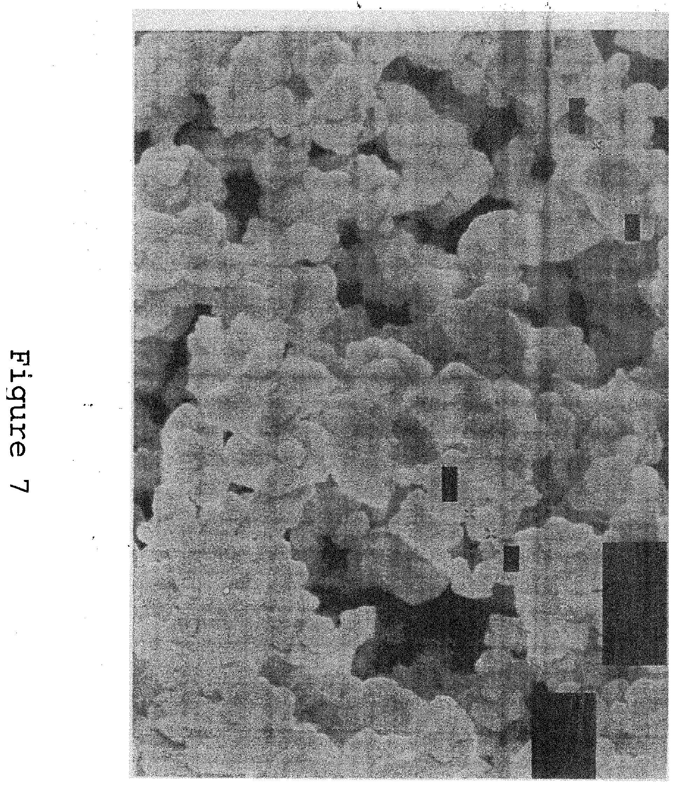

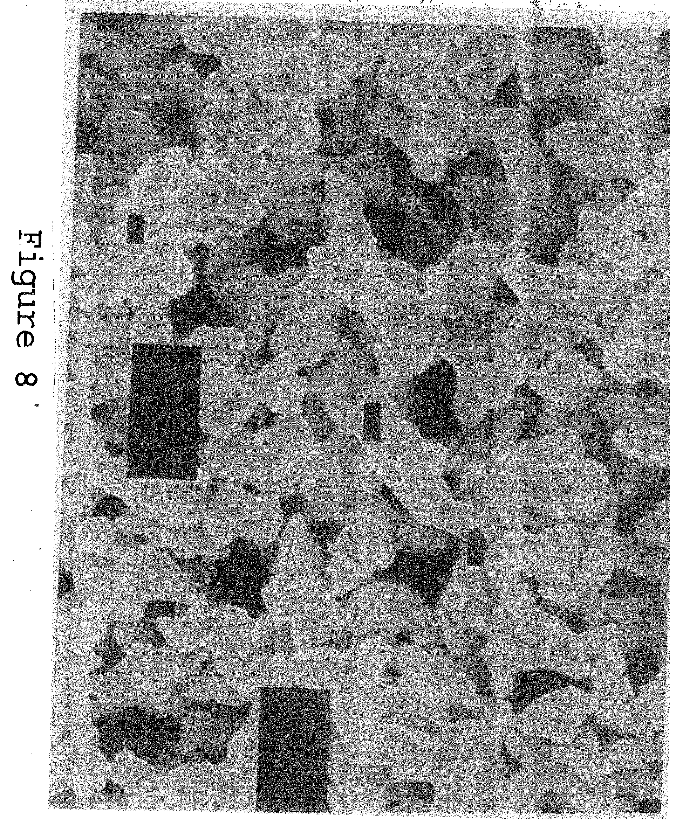

Scanning electron microscope photographs of the precursor as well as of the LiFePO₄ (cfr. Figs. 7-8) depict a globular structure, the grains having an average size of about 120 to 150 nanometers. The material's electrochemical properties are closely related to its nanometric structure, since lithium spreads extremely slowly through LiFePO₄. To this effect, it is useful to observe that the materials obtained with traditional ceramic methods (solid state reaction of the precursors) leads to the formation of crystalline LiFePO₄ with micrometric - as opposed to nanometric - grain sizes

## Claims

1. Process for the production of nano-sized microcrystalline LiFePO₄, which is particularly suitable for the production of high energy density electrodes and/or batteries, **characterized by** the fact that it provides for the solid state reaction of anhydrous iron (III) phosphate (FePO₄), through the reducing and lithiating agent lithium acetate and through the heat treatment in air - which is carried out while maintaining the material at a temperature between 550°C and 600°C for a period of not less than 15 minutes - and the simultaneous crystallization of LiFePO₄.

2. Process according to the previous claims, **characterized by** the fact that anhydrous iron phosphate (FePO₄) is obtained through the heat treatment of iron phosphate hydrate (FePO₄*xH₂O) at a temperature ranging from 300°C to 400°C for a period of not less than 15 minutes.

3. Process according to the previous claims, **characterized by** the fact that iron phosphate hydrate (FePO₄*xH₂O) is obtained from the shift reaction of Fe³⁺ on a soluble phosphate salt or by the oxidation of a Fe²⁺ salt and the simultaneous shifting thereof on a soluble phosphate salt.

4. Process according to the previous claims; **characterized by** the fact that the microcrystalline lithium-iron-phosphate has a globular type structure, the average size of the grains being of about 120 ÷ 150 nm.

5. Process according to one of the previous claims, **characterized by** the fact that the said heat treatment for the preparation of lithium-iron-phosphate is carried out while maintaining the material in air, in the presence of the lithiating and reducing agents at a temperature of 550°C for 30 minutes.

## Patentansprüche

1. Verfahren zur Herstellung von mikrokristallinem LiFePO₄ in Nanogröße, das insbesondere zur Herstellung von Elektroden und / oder Batterien mit hoher Energiedichte geeignet ist, welche **dadurch gekennzeichnet ist, dass** es für die Festkörperreaktion von wasserfreiem Eisen(III)-phosphat (FePO4), durch das Reduktions- und Lithiummittel Lithiumacetat und durch Wärmebehandlung sorgt - die durchgeführt wird, indem das Material an der Luft einer Temperatur zwischen 550 ° C und 600 ° C für eine Dauer von nicht weniger als 15 Minuten ausgesetzt wird - bei gleichzeitiger Kristallisation von LiFePO₄.

2. Verfahren nach den vorigen Patentansprüchen, **dadurch gekennzeichnet, dass** wasserfreies Eisenphosphat (FePO 4) durch Wärmebehandlung von Eisenphosphathydrat (FePO₄*xH₂O) bei einer Temperatureinwirkung im Bereich von 300 ° C bis 400 ° C von mindestens 15 Minuten, gewonnen wird.

3. Verfahren nach den vorigen Patentansprüchen, **dadurch gekennzeichnet, dass** das Eisenphosphathydrat (FePO4*xH₂O) aus der Shift-Reaktion zwischen Fe³⁺ und einem löslichen Phosphatsalz oder durch Oxidation eines Fe²⁺ -Salzes und der gleichzeitigeren Verschiebung desselben auf ein lösliches Phosphatsalz, erhalten wird.

4. Verfahren nach den vorigen Patentansprüchen, **dadurch gekennzeichnet, dass** das mikrokristalline Lithium-Eisen-Phosphat eine kugelförmige Struktur aufweist, wobei die durchschnittliche Größe der Körner etwa 120 bis 150 nm beträgt.

5. Verfahren nach einem der vorigen Patentansprüche, **dadurch gekennzeichnet, dass** die besagte Wärmebehandlung zur Herstellung von Lithium-Eisen-Phosphat unter Beibehaltung des Materials an Luft in Gegenwart von Lithium und Reduktionsmitteln bei einer Temperatur von 550 ° C für 30 Minuten durchgeführt wird.

## Revendications

1. Procédé pour la production de LiFeP04 cristallin de taille nanométrique, particulièrement adapté à la production d'électrodes et/ou de piles à haute densité énergétique, **caractérisé par le fait qu'**il provoque une réaction du phosphate (FePo4) de fer anhydre (III) à l'état solide, à travers la réduction et la lithiation d'un agent d'acétate de lithium et au moyen d'un traitement thermique à l'air - effectué en maintenant le matériau à une température comprise entre 550° et 600° pendant au moins 15 minutes-et de la cristallisation simultanée du LiFeP04.

2. Procédé selon la revendication précédente, **caractérisé par le fait que** le phosphate de fer anhydre (FeP04) est obtenu à travers un traitement thermique du phosphate de fer hydraté (FePO4*Xh2O) à une température comprise entre 300° et 400°C pendant au moins 15 minutes.

3. Procédé selon les revendications précédentes, **caractérisé par le fait que** le phosphate de fer hydraté (FePO4*Xh2O) est obtenu par la réaction de conversion du Fe3+ sur un sel de phosphate soluble ou par l'oxydation d'un sel de Fe2+ et la conversion simultanée de celui-ci sur un sel de phosphate soluble.

4. Procédé selon les revendications précédentes, **caractérisé par le fait que** le lithium-fer-phosphate microcristallin a une structure de type globulaire, avec des grains d'une taille moyenne d'environ 120 150 nm.

5. Procédé selon une des revendications précédentes, **caractérisé par le fait que** ledit traitement thermique utilisé pour la préparation du lithium-fer-phosphate est réalisé tout en maintenant le matériau dans l'air, en présence de lithium et d'agents réducteurs, à une température de 550° pendant 30 minutes.
